# EUROPÄISCHE PATENTSCHRIFT

(11) **EP 0 677 919 B1**
(45) Veröffentlichungstag und Bekanntmachung des Hinweises auf die Patenterteilung: **20.05.1998**
(21) Anmeldenummer: 95250067.6
(22) Anmeldetag: 21.03.1995
(51) Int. Cl.: H02P 7/00

(54) **Verfahren zur Regelung einer umrichtergespeisten Asynchronmaschine im Feldschwächebetrieb**
Method for the control of an asynchronous machine supplied from a converter in the operation of weakening of field
Procédé de commande d'une machine asynchrone à l'alimentation d'un changeur en opération d'affaiblissement de champ

(30) Priorität: 14.04.1994 DE 4413196
(43) Veröffentlichungstag der Anmeldung: 18.10.1995
(73) Patentinhaber: MANNESMANN Aktiengesellschaft, 40213 Düsseldorf (DE)
(72) Erfinder: Meyer, Uwe, D-22047 Hamburg (DE); Neumann, Harald, D-25436 Tornesch (DE); Volmer, Michael, D-24558 Hensted-Ulzburg (DE)
(74) Vertreter: Presting, Hans-Joachim, Dipl.-Ing.

(56) Entgegenhaltungen:
- EP-A- 0 553 370
- DE-A- 3 040 105
- DE-A- 3 346 807

## Beschreibung

Die Erfindung betrifft ein Verfahren zur Regelung einer umrichtergespeisten Asynchronmaschine im Feldschwächebetrieb, insbesondere zur Regelung eines Antriebs für Hubwerke oder ähnliche Anwendungen mit aktivem Lastmoment, wobei der Antrieb eine Drehzahlregelung mit Hochlaufgeber, unterlagerter Schlupffrequenz- und Überstrombegrenzung, stator- und schlupffrequenzabhängige Steuerung der Statorspannung zum kippsicheren Betrieb im Grunddrehzahlbereich enthält.

Derartige umrichtergespeiste Asynchronmaschinen im Feldschwächbetrieb werden z.B. in der Hubwerkstechnik oder ähnlichen Anwendungen mit aktivem Lastmoment eingesetzt (Aufsatz aus Fachzeitschrift "Antriebstechnik 12 - 1973, Nr. 7 - Zwischenkreisumrichter für universellen Einsatz"). Hierbei ist dem Fachmann erkennbar das Motornennmoment abnehmend proportional l/f bzw. l/n geläufig. In der Praxis bedeutet dies, daß eine Nennhublast mit kleiner Geschwindigkeit (entsprechend Nennfrequenz 50 Hz) und kleinere Hublasten mit größeren Geschwindigkeiten (bis 150 Hz) gefahren werden können, so daß die jeweiligen Produkte als Leistung gleichbleibend sind. Es ist weiterhin bekannt, eine Stromerfassung in jedem Umrichter als Überstromschutz vorzusehen. Die Anwendung dieses Prinzips unterliegt somit der kontinuierlichen Messung des Stroms und liegt insofern auf dem Gebiet der analogen Regelung. Insofern ist das bekannte Verfahren zur Regelung einer umrichtergespeisten Asynchronmaschine im Feldschwächbetrieb nicht mehr flexibel genug, um als modernes software-gesteuertes Verfahren eingesetzt werden zu können.

Feldschwächebetrieb einer Asynchronmaschine entsteht, wenn bei Stator-Nennspannung die Statorfrequenz und damit die Drehzahl über ihren Nennwert hinaus gesteigert wird. Dabei fallen Maschinenfluß und Nennmoment (bei Stator-Nennstrom) näherungsweise umgekehrt proportional mit der Frequenzerhöhung; das Kippmoment fällt jedoch quadratisch. Dieser Zusammenhang bedeutet eine Begrenzung der möglichen Frequenzerhöhung, da das Nennmoment im allgemeinen kleiner als das Kippmoment bleiben muß oder höchstens gleich werden kann bei geeignetem Regelverfahren.

Die vorstehende Betriebsweise ist für Antriebe geeignet, die bei Nenndrehzahlen mit weniger als Nennmoment belastet sein können und deren Drehzahl bis zum Erreichen des frequenzabhängigen Nennmomentes gesteigert werden soll. Beispiele dafür sind Hauptantriebe von Werkzeugmaschinen bei geringer Zerspanungsleistung und Antriebe von Hubwerken bei schwach belastetem Haken.

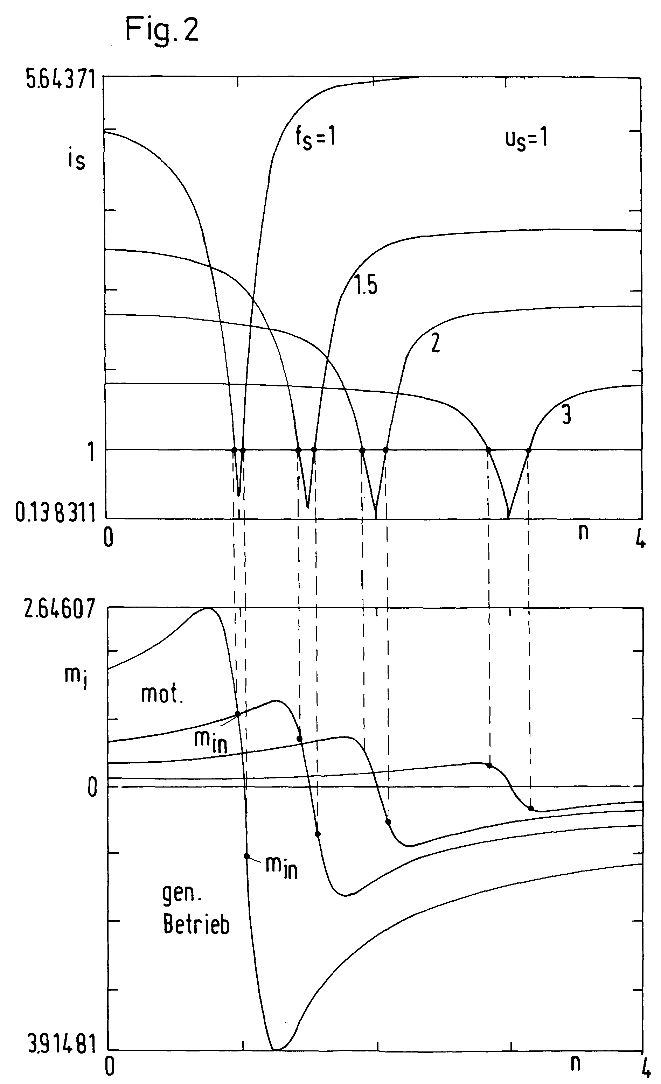

Das von der Erfindung zu lösende Problem läßt sich anhand Fig. 2 näher erläutern:
In Fig. 2 ist das Verhalten einer Asynchronmaschine im Feldschwächbetrieb dargestellt. Die für stationären Betriebszustand berechneten Größen sind auf ihre Nennwerte bei Stator-Nennfrequenz bezogen, sie bedeuten im einzelnen:
- uₛ :: Statorspannung
- fₛ :: Statorfrequenz
- iₛ :: Statorstrom-Betrag
- mᵢ :: inneres Drehmoment
- m_{L} :: Lastmoment
- n :: Drehzahl

Dargestellt sind für die Statorfrequenzen fₛ = 1; 1,5; 2; 3 bei der Statorspannung uₛ = 1, oben die Statorströme iₛ und unten die Drehmomente m als Funktion der Drehzahl n. In die jeweilige Drehmomentkurve sind die Nennmomente mᵢₙ für motorischen und generatorischen Betriebszustand projiziert, ausgehend von der zugehörigen Stromkurve für den Statorstrom iₛ = 1. Man erkennt die zuvor erwähnte Abhängigkeit von der Statorfrequenz. Bei steigenden Werten fällt das Kippmoment wesentlich stärker ab als das Nennmoment. Dabei bleibt die Schlupffrequenz fᵣ = fₛ - n für das Kippmoment quasi konstant, unabhängig von dessen Vorzeichen. Die Schlupffrequenz steigt etwas stärker als proportional mit der Statorfrequenz für das Nennmoment. Die generatorischen Nennmomente sind betragsmäßig etwas größer und die Nennschlupffrequenzen etwas kleiner als die motorischen. Bei der Statorfrequenz fₛ = 3, also dreifache Nennfrequenz, ist das Kippmoment im motorischen Betriebszustand nur noch um 9 % größer als das Nennmoment, im generatorischen um 15 %. Ein solcher Betriebspunkt kann jedoch instabil sein, da Schwankungen der Statorspannung oder des Lastmomentes zum Überschreiten der Kippschlupffrequenz führen können.

Weiterhin ist aus Fig. 2 erkennbar, daß der Statorstrom als Betragsgröße kein eindeutiges Maß für den Betriebszustand der Asynchronmaschine ist, da das zugehörige Drehmoment motorisch oder generatorisch sein kann entsprechend seinem jeweiligen Vorzeichen. Außerdem kann es bei hoher Statorfrequenz und/oder verminderter Statorspannung infolge Untertoleranz der Netzspannung vorkommen, daß der Statorstrom im gekippten Zustand nicht wesentlich über den Nennwert oder gar eine höhere Grenze ansteigt, was sich in der Stromkurve für fₛ = 3 andeutet. Dieser Zustand wird dann nicht sicher erkannt. Der Zustand kann zu gefährlichen Reaktionen des Antriebs führen. Dieser Fall ist besonders bei Hubwerken mit dem aktiven Lastmoment kritisch; hier würde die Last abstürzen.

Es ist zur Regelung einer umrichtergespeisten Asynchronmaschine an sich bekannt, zur Überwachung des Betriebszustandes einen Drehzahlgeber einzusetzen. Überwacht werden z.B. die Drehrichtung beim Anfahren der Last, Schleppfehler zum Erkennen und Abschalten von Überlasten, insbesondere die Kippschlupffrequenz nach Betrag und Vorzeichen. Weiterhin wird der Drehzahlgeber benutzt, um den Antrieb drehzahlgeregelt mit unterlagerter Schlupffrequenzbegrenzung im Grunddrehzahlbereich zu fahren. Die Schlupffrequenzbegrenzung kann jedoch nicht ohne weiteres in den Feldschwächebereich ausgedehnt werden.

Der vorliegenden Erfindung liegt daher die Aufgabe zugrunde, auf der Basis einer Drehzahlregelung mit Hochlaufgeber, unterlagerter Schlupffrequenz- und Überstrombegrenzung, stator- und schlupffrequenzabhängiger Steuerung der Statorspannung einen kippsicheren Betrieb im Feldschwächebereich zu gewährleisten.

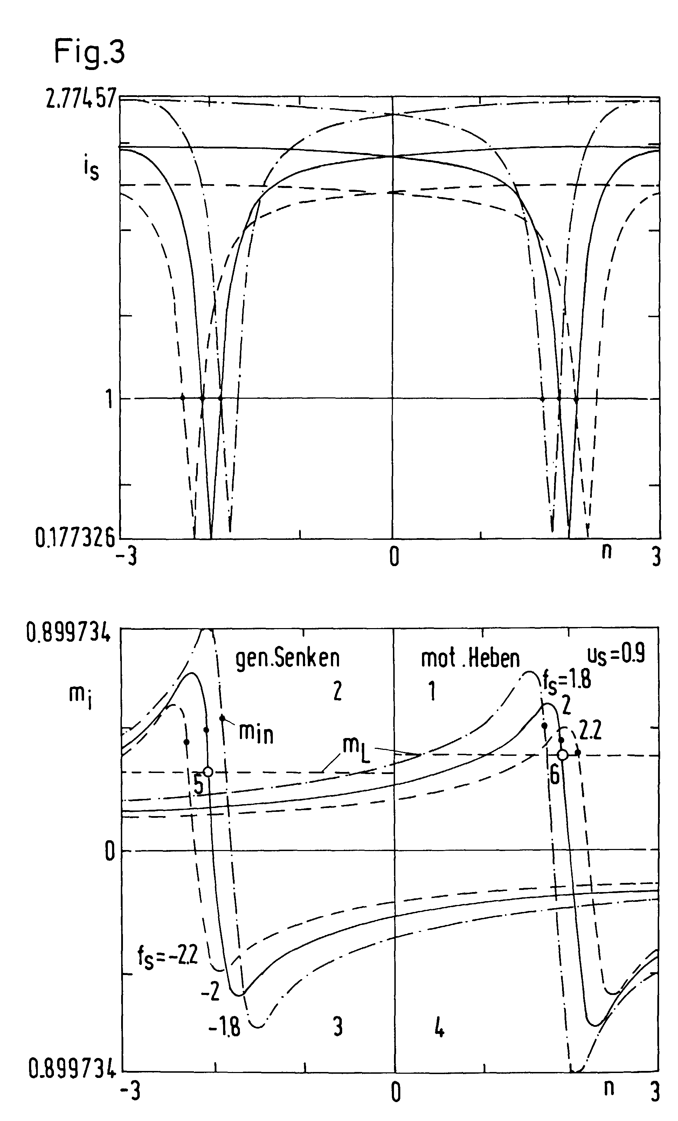

Dieses Problem wird anhand Fig. 3 erläutert. Dargestellt sind für die Statorfrequenzen fₛ = ± (1,8; 2; 2,2), das Vorzeichen bedeutet Drehfeldrichtung; bei Statorspannung uₛ = 0,9 oben die Statorströme iₛ und unten die Drehmomente mᵢ als Funktion der Drehzahl n für die vier betrieblich möglichen Quadranten. Eingezeichnet sind in den Quadranten 1 und 2 die Nennmomente mᵢₙ und das Lastmoment m_{L}, das für Heben und Senken um die Reibungsverluste im Hubwerk unterschiedlich ist. Beim Senken sind Statorfrequenz und Drehzahl negativ, was durch fₛ = - |fₛ| und n = - |n| ausgedrückt werden kann. Die Schupffrequenz fᵣ = fₛ - n = - |fₛ| + |n| ist beim generatorischen Senken positiv wie beim motorischen Heben, beide sind der gleichen Lastmomentrichtung zugeordnet. Für den Fall, daß beim generatorischen Senken eine stetig wirkende Schlupffrequenzbegrenzung vorhanden ist, wird diese beim Überschreiten der beispielsweise durch den Schnittpunkt 5 gegebenen Schlupffrequenz als Grenzwert, durch transientes Überschwingen der Drehzahl nach der Beschleunigung auf Punkt 5 verursacht, die Statorfrequenz erhöhen, um die Schlupffrequenz gemäß fᵣ = - |fₛ| + |n| wieder auf den Grenzwert zu bringen. Damit wird jedoch das generatorische Drehmoment mᵢ kleiner als das Lastmoment m_{L}, so daß der Antrieb an der Schlupffrequenzgrenze weiter beschleunigt, schließlich die höchstmögliche Statorfrequenz erreicht und dort kippt, wenn das Lastmoment größer als das Kippmoment ist. Der Drehzahlregler ist ab dem Schnittpunkt 5 übersteuert, weil dort der Drehzahl-Istwert größer als der vorgegebene Sollwert wird; er kann daher diesen Vorgang nicht verhindern.

Demgegenüber ist beim motorischen Heben ein stabiles Arbeiten an der Schlupffrequenzgrenze möglich. Eine beispielsweise im Schnittpunkt 6 den Grenzwert überschreitende Schlupffrequenz wird gemäß fᵣ = fₛ - n (alle Größen sind hier positiv) die Statorfrequenz vermindern, so daß der Antrieb verzögert und mit der niedrigeren Statorfrequenz bei gleichem Lastmoment eine dem Grenzwert entsprechende kleinere Schlupffrequenz bildet.

Die gestellte Aufgabe wird erfindungsgemäß dadurch gelöst, daß bei Anforderung einer Drehzahl im Feldschwächebereich für die Betriebsarten "motorisches Heben" und/oder "generatorisches Senken" gleichermaßen folgende Schritte ausgeführt werden:
a) zunächst wird bis zur Nenndrehzahl beschleunigt und der weitere Hochlauf für eine kurze Zeit gesperrt, nach Abklingen der transienten Vorgänge wird die Schlupffrequenz gemessen und mit einem festgelegten Grenzwert im Bereich der Nennschlupffrequenz verglichen,
b) ist die Schlupffrequenz merklich kleiner als der Grenzwert, wird durch Berechnen oder Abfragen in einer angelegten (ersten) Tabelle in einem Rechner ein der Schlupffrequenz zugeordneter maximaler Drehzahlsollwert für einen beliebig definierbaren Statorstromverlauf im Feldschwächbereich ermittelt,
c) dieser Drehzahlsollwert wird bis zum nächsten Stillsetzen oder Reversieren gespeichert und
d) dann wird die Schlupffrequenzbegrenzung des Grunddrehzahlbereichs unwirksam gemacht und der weitere Hochlauf bis zur ermittelten maximalen Drehzahl freigegeben.

Damit ist auch die maximale Statorfrequenz festgelegt, so daß die Drehmonent-/Drehzahlkurven bis nahe zum Kippmoment stabile Schnittpunkte mit dem Lastmoment bilden, je nach Betriebsart in den Schnittpunkten 5 und 6 gemäß Fig. 3.

Die erwähnte (erste) Tabelle kann nach verschiedenen Gesichtspunkten aufgebaut sein, z.B. für konstante Wellenleistung der Asynchronmaschine mit wachsendem Statorstrom oder konstantem bzw. mit der Drehzahl fallendem Statorstrom. Für generatorisches Senken und motorisches Heben können auch unterschiedliche Werte abgelegt sein. Die Anwendung des erfindungsgemäßen Verfahrens kann auch auf das generatorische Senken beschränkt sein.

Für das motorische Heben ist eine besondere Lösung vorgesehen. Auf der Basis des Verfahrens zur Regelung einer umrichtergespeisten Asynchronmaschine im Feldschwächebetrieb, insbesondere zur Regelung eines Antriebs für Hubwerke oder ähnliche Anwendungen mit aktivem Lastmoment, wobei der Antrieb eine Drehzahlregelung mit Hochlaufgeber, unterlagerter Schlupffrequenz- und Überstrombegrenzung, stator- und schlupffrequenzabhängige Steuerung der Statorspannung zum kippsicheren Betrieb im Grunddrehzahlbereich enthält, ist zur Lösung des Problems erfindungsgemäß vorgesehen, daß bei Anforderung einer Drehzahl im Feldschwächbereich für die Betriebsart "motorisches Heben" folgende Schritte ausgeführt werden:
a) unter Beibehaltung der Schlupffrequenzbegrenzung des Grunddrehzahlbereichs im Feldschwächbereich wird der Grenzwert bis zur Kippschlupffrequenz abhängig von der jeweiligen Drehzahl kontinuierlich berechnet oder aus einer angelegten (zweiten) Tabelle für einen beliebig definierbaren Statorstromverlauf ermittelt,
b) der Hochlauf wird dann in einem Zug bis zu der sich frei einstellenden maximalen Drehzahl durchgeführt und
c) der Hochlaufgeber wird bei Erreichen der maximalen Drehzahl angehalten.

Der Vorteil dabei ist die Ausnutzbarkeit des motorischen Drehmomentes bis zum Kippmoment und die Vermeidung der Meßzeit bei Nenndrehzahl. Es wird also in einem Zug bis zu der sich aus dem Gleichgewicht zwischen motorischem Drehmoment und Lastmoment frei einstellenden maximalen Drehzahl beschleunigt, wenn die zuvor angeforderte Drehzahl darüber liegt. Der Hochlaufgeber muß jedoch bei Erreichen der maximalen Drehzahl angehalten werden, um eine Verzugszeit beim anschließenden Zurückstellen der Drehzahl oder Stillsetzen des Antriebs zu vermeiden.

Ausführungsbeispiele der Erfindung sind in der Zeichnung dargestellt und werden - soweit noch nicht geschehen - im folgenden näher beschrieben. Es zeigen
- Fig. 1: ein Blockschaltbild einer Gerätekonfiguration, die durch entsprechende Software ergänzt wird,
- Fig. 2: ein Kurvendiagramm der Statorströme bzw. der inneren Drehmomente in Abhängigkeit der Statorfrequenz als Parameter und der Drehzahl bei motorischem und generatorischem Betrieb und
- Fig. 3: ein Kurvendiagramm der Statorströme bzw. der inneren Drehmomente in Abhängigkeit der Statorfrequenz als Parameter und der Drehzahl und damit verbundenem Drehmomentverlauf für Nennmoment und Lastmoment in Abhängigkeit der Statorfrequenz in den Quadranten 1 und 2.

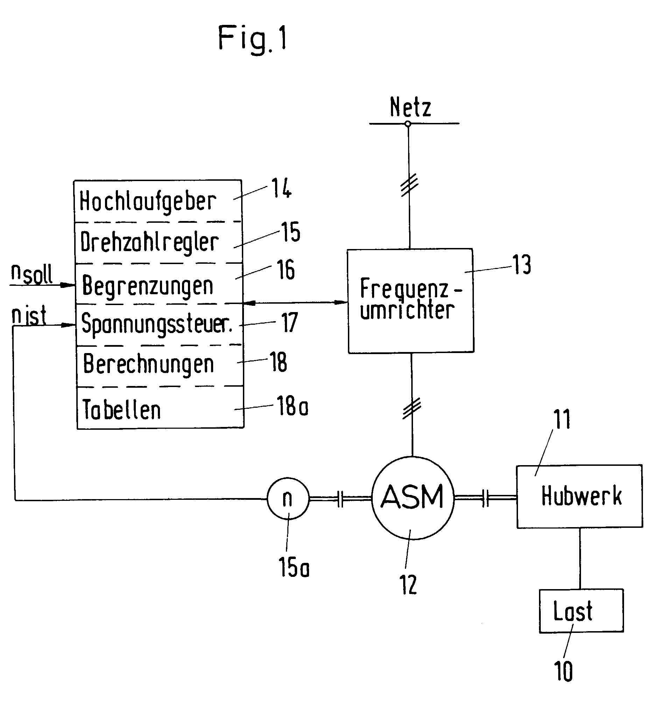

Gemäß Fig. 1 ist für eine Anwendung mit aktivem Lastmoment eine Last 10 an einem Hubwerk 11 angehängt. Das Hubwerk 11 wird durch eine Asynchronmaschine 12 angetrieben, wobei eine lastabhängige Regelung der Hubgeschwindigkeit mit höheren Werten bei Teillasten erfolgt. Die Asynchronmaschine 12 wird von einem Frequenzumrichter 13 gespeist, der über einen Hochlaufgeber 14, einen Drehzahlregler 15 und Begrenzungen 16 sowie eine Spannungssteuerung 17 angesteuert wird. In einem Rechner 18 werden der maximale Drehzahlsollwert bzw. der Schlupffrequenz-Grenzwert berechnet oder aus den erwähnten (ersten bzw. zweiten) Tabellen 18a abgefragt, wobei an der Asynchronmaschine 12 eine Drehzahlmessung 15a erfolgt.

Der Verfahrensablauf ist wie bereits zu den Fig. 2 und 3 beschrieben, worauf Bezug genommen wird.

## Patentansprüche

1. Verfahren zur Regelung einer umrichtergespeisten Asynchronmaschine im Feldschwächebetrieb, insbesondere zur Regelung eines Antriebs für Hubwerke oder ähnliche Anwendungen mit aktivem Lastmoment, wobei der Antrieb eine Drehzahlregelung mit Hochlaufgeber, unter lagerte Schlupffrequenz- und Überstrombegrenzung, stator- und schlupffrequenzabhängige Steuerung der Statorspannung zum kippsicheren Betrieb im Grunddrehzahlbereich enthält,
dadurch gekennzeichnet,
daß bei Anforderung einer Drehzahl im Feldschwächbereich für die Betriebsarten "motorisches Heben" und/oder "generatorisches Senken" gleichermaßen folgende Schritte ausgeführt werden:
a) zunächst wird bis zur Nenndrehzahl beschleunigt und der weitere Hochlauf für eine kurze Zeit gesperrt, nach Abklingen der transienten Vorgänge wird die Schlupffrequenz gemessen und mit einem festgelegten Grenzwert im Bereich der Nennschlupffrequenz verglichen,
b) ist die Schlupffrequenz merklich kleiner als der Grenzwert, wird durch Berechnen oder Abfragen in einer angelegten (ersten) Tabelle in einem Rechner ein der Schlupffrequenz zugeordneter maximaler Drehzahlsollwert für einen beliebig definierbaren Statorstromverlauf im Feldschwächbereich ermittelt,
c) dieser Drehzahlsollwert wird bis zum nächsten Stillsetzen oder Reversieren gespeichert und
d) dann wird die Schlupffrequenzbegrenzung des Grunddrehzahlbereichs unwirksam gemacht und der weitere Hochlauf bis zur ermittelten maximalen Drehzahl freigegeben.

2. Verfahren zur Regelung einer umrichtergespeisten Asynchronmaschine im Feldschwächebetrieb, insbesondere zur Regelung eines Antriebs für Hubwerke oder ähnliche Anwendungen mit aktivem Lastmoment, wobei der Antrieb eine Drehzahlregelung mit Hochlaufgeber, unterlagerte Schlupffrequenz- und Überstrombegrenzung, stator- und schlupffrequenzabhängige Steuerung der Statorspannung zum kippsicheren Betrieb im Grunddrehzahlbereich enthält,
dadurch gekennzeichnet,
daß bei Anforderung einer Drehzahl im Feldschwächbereich für die Betriebsart "motorisches Heben" folgende Schritte ausgeführt werden:
a) unter Beibehaltung der Schlupffrequenzbegrenzung des Grunddrehzahlbereichs im Feldschwächbereich wird der Grenzwert bis zur Kippschlupffrequenz abhängig von der jeweiligen Drehzahl kontinuierlich berechnet oder aus einer angelegten (zweiten) Tabelle für einen beliebig definierbaren Statorstromverlauf ermittelt,
b) der Hochlauf wird in einem Zug bis zu der sich frei einstellenden maximalen Drehzahl durchgeführt und
c) der Hochlaufgeber wird bei Erreichen der maximalen Drehzahl angehalten.

## Claims

1. A method for automatically controlling a converter-supplied asynchronous machine in field-weakening operation, in particular for automatically controlling a drive for lifting mechanisms or similar applications with active lifting torque, the drive comprising a speed regulation means with acceleration rate limiter, secondary slip frequency and overcurrent limitation, stator- and slip frequency-dependent control of the stator voltage for non-tilting operation in the base speed range, characterised in that on requesting a speed in the field-weakening range for the modes "motor-driven lifting" and/or "generator-driven lowering" equally the following steps are carried out:
a) first of all, acceleration is effected up to the rated speed and the additional acceleration is blocked for a short time, once the transient processes have subsided the slip frequency is measured and compared with a set limit value in the region of the rated slip frequency,
b) if the slip frequency is markedly less than the limit value, a maximum desired speed value associated with the slip frequency is determined for a stator current path which can be defined as desired in the field-weakening range by calculating or scanning in an applied (first) table in a computer,
c) this desired speed value is stored until the next stoppage or reverse, and
d) then the slip frequency limitation of the base speed range is rendered ineffective and the further acceleration is released up to the maximum speed determined.

2. A method for automatically controlling a converter-supplied asynchronous machine in field-weakening operation, in particular for automatically controlling a drive for lifting mechanisms or similar applications with active lifting torque, the drive comprising a speed regulation means with acceleration rate limiter, secondary slip-frequency and overcurrent limitation, stator- and slip frequency-dependent control of the stator voltage for non-tilting operation in the base speed range, characterised in that on requesting a speed in the field-weakening range for the mode "motor-driven lifting" the following steps are carried out:
a) whilst maintaining the slip frequency limitation of the base speed range in the field-weakening range, the limit value is continuously calculated up to the pull-out slip frequency dependent on the respective speed or is determined for a stator current path which can be defined as desired from an applied (second) table,
b) the acceleration is effected in one move up to the freely occurring maximum speed, and
c) the acceleration rate limiter is stopped upon reaching the maximum speed.

## Revendications

1. Procédé destiné à la régulation d'une machine asynchrone alimentée par convertisseur et fonctionnant en shuntage de champ, régulation notamment d'un moteur pour des appareils de levage ou des applications analogues ayant un couple résistant actif, le moteur contenant une régulation de la vitesse de rotation avec un transmetteur d'accélération, avec une limitation subordonnée de la fréquence de glissement et du courant de surcharge et avec une commande, en fonction de la fréquence de stator et de la fréquence de glissement, de la tension de stator, en vue d'un fonctionnement fiable au renversement dans la plage de la vitesse de base,
caractérisé en ce que, à la demande d'une vitesse dans la plage du shuntage de champ, on effectue pour les modes de fonctionnement "levage moteur" et/ou "abaissement générateur" les opérations suivantes :
a) on accélère d'abord jusqu'à la vitesse nominale et on bloque la suite de l'accélération pour une courte durée, on mesure la fréquence de glissement après la disparition des phénomènes transitoires et on la compare à une valeur limite fixée dans la plage de la fréquence de glissement nominale,
b) si la fréquence de glissement est nettement plus petite que la valeur limite, on détermine dans un ordinateur, par le calcul ou par l'interrogation d'un (premier) tableau donné, une valeur de consigne de vitesse maximale associée à la fréquence de glissement pour une courbe de courant statorique pouvant être définie librement dans la plage du shuntage de champ,
c) on mémorise cette valeur de consigne de vitesse jusqu'au prochain arrêt ou renversement, et
d) on rend ensuite inactive la limitation de la fréquence de glissement de la plage de la vitesse de base et on libère la suite de l'accélération jusqu'à la vitesse maximale déterminée.

2. Procédé destiné à la régulation d'une machine asynchrone alimentée par convertisseur et fonctionnant en shuntage de champ, régulation notamment d'un moteur pour des appareils de levage ou des applications analogues ayant un couple résistant actif, le moteur contenant une régulation de la vitesse de rotation avec un transmetteur d'accélération, avec une limitation subordonnée de la fréquence de glissement et du courant de surcharge et avec une commande, en fonction de la fréquence de stator et de la fréquence de glissement, de la tension de stator, en vue d'un fonctionnement fiable au renversement dans la plage de la vitesse de base,
caractérisé en ce que, à la demande d'une vitesse dans la plage du shuntage de champ, on effectue pour le mode de fonctionnement "levage moteur" les opérations suivantes :
a) en conservant la limitation de fréquence de glissement de la plage de la vitesse de base dans la plage du shuntage de champ, on calcule en permanence la valeur limite jusqu'à la fréquence de glissement de renversement en fonction de la vitesse courante ou on la détermine à partir d'un (deuxième) tableau donné pour une courbe de courant statorique pouvant être définie librement,
b) on effectue ensuite l'accélération d'un seul coup jusqu'à la vitesse maximale se réglant automatiquement, et
c) on arrête le transmetteur d'accélération lorsque la vitesse maximale est atteinte.
